# EUROPEAN PATENT SPECIFICATION

(11) **EP 0 967 700 B1**
(45) Date of publication and mention of the grant of the patent: **12.08.2009**
(21) Application number: 99201906.7
(22) Date of filing: 15.06.1999
(51) Int. Cl.: H02B 1/056

(54) **Electrical busbar with a terminal**
Stromschiene mit einem Anschlusselement
Barre omnibus avec une borne

(30) Priority: 24.06.1998 DE 19828155
(43) Date of publication of application: 29.12.1999
(73) Proprietor: Delphi Technologies, Inc., Troy, MI 48007 (US)
(72) Inventor: Scholz, Bernd, 42799 Leichlingen (DE)
(74) Representative: Denton, Michael John

(56) References cited:
- US-A- 5 023 752
- US-A- 5 249 973

## Description

### Technical Field

The present invention relates to an electrical busbar with at least one terminal.

### Background of the Invention

Electrical centres in motor vehicles commonly provide electrical connections to male terminal blades of electrical relays or other electrical switching devices, and/or male terminals blades of electrical fuses, and/or electrical conductors providing power to remotely located fuses, and/or terminals of electrical conductors providing power to electrical loads. Such electrical centres require the distribution of a common electrical voltage (typically from the vehicle battery). Known electrical centres have complex designs of electrical busbars and terminals which interconnect to provide the distribution of the common voltage. Also, the electrical busbars and terminals are generally designed for specific electrical centres and so any changes in options for the electrical centre require changes in the busbars and terminals required for the electrical centre. US-A-5249973 discloses a busbar in accordance with the preamble of claim 1.

### Summary of the Invention

It is an object of the present invention to provide an electrical busbar with terminals which is an improvement over known arrangements.

An electrical busbar in accordance with the present invention as defined in the independent claim 1, easy to produce, and is usable for various options without changes being required.

### Brief Description of the Drawings

The present invention will now be described, by way of example, with reference to the accompanying drawings, in which:-
Figure 1 is a perspective view of an electrical busbar in accordance with the present invention;
Figure 2 is an enlarged perspective view of a terminal of the electrical busbar of Figure 1;
Figure 3 is an exploded view of an electrical centre for a motor vehicle using the electrical busbar of Figure 1; and
Figure 4 is an enlarged perspective view of an alternative terminal for an electrical busbar in accordance with the present invention.

### Description of the Preferred Embodiment

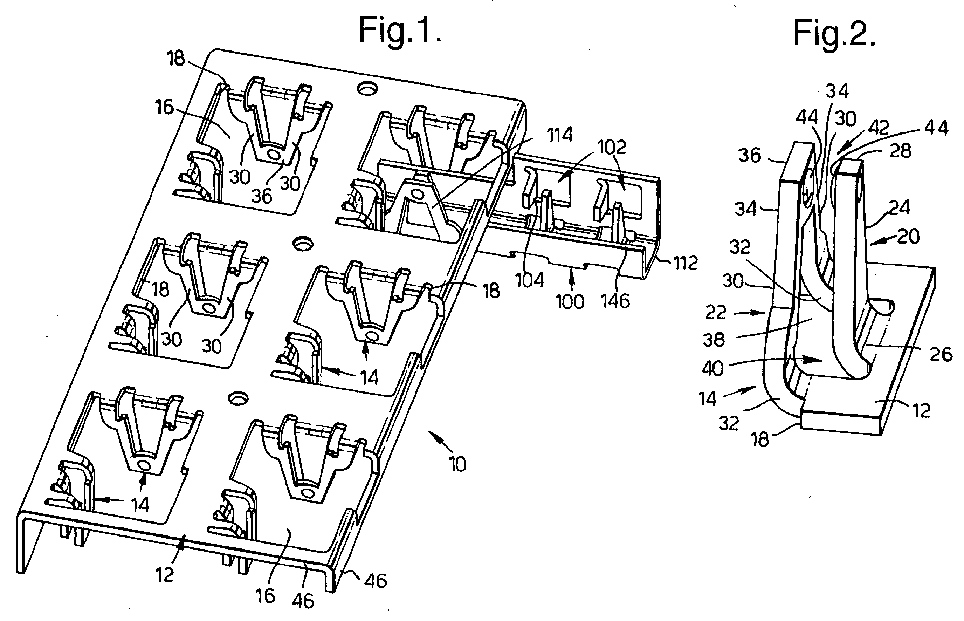

Referring to Figure 1, the electrical busbar 10 in accordance with the present invention is formed by stamping in one piece from a sheet of metallic material and then folding to form the busbar with a substantially planar portion 12 and a number of terminals 14 integrally connected with the planar portion. The stamping and folding operations can be any suitable method and will not be described in detail.

The planar portion 12 has a number of apertures 16. Each terminal 14 is formed at one edge 18 of one of the apertures 16. Preferably two terminals 14 are formed in each aperture 16 in edges 18 substantially perpendicular to one another. Each terminal 14 (Figure 2) comprises a first part 20 and a second part 22. The first part 20 of each terminal 14 comprises a single arm 24 which is integrally connected to the respective edge 18 at one end 26 and which is free at the other end 28. The second part 22 of each terminal 14 comprises a pair of arms 30, each of which is integrally connected to the same edge 18 as the first part 20 at one end 32, and which are integrally joined at the other end 34 by a base portion 36, such that the second part is preferably substantially U-shaped or V-shaped. The ends 32 of the arms 30 of the second part 22 are positioned either side of the end 26 of the arm 24 of the first part 20. The arm 24 of the first part 20 lies in a first plane, and the arms 30 of the second part 22 lie in a second plane. The first and second planes are substantially parallel to one another, spaced apart, and substantially perpendicular to the planar portion 12. The space between the arms 24,30 of the first and second parts 20,22, respectively, defines a slot 38 which is open at both ends, one open end 40 being defined by the gap between the ends 32 of the arms 30 of the second part, and the other open end 42 being defined by the gap between the free end 28 of the first arm and the base portion 36 of the second arm. The base portion 36 of the second part 22 is preferably positioned adjacent the free end 28 of the first part 20, and the base portion and the free end preferably have raised bumps 44 which are directed towards one another. Additionally, or alternatively, substantially identical terminals may be formed at an outer edge 46 of the planar portion 12.

In use, each terminal 14 may receive a male terminal blade or a rigid planar electrical conductor which is inserted either through the open end 40 or through the open end 42 into the slot 38 to be frictionally gripped by, and electrically connect with, the first and second parts 20,22 of the terminal. For certain applications, a female terminal may be pushed on to the first part 20 or the second part 22, or both, of the terminal 14 to frictionally grip, and electrically connect with, the respective part. The raised bumps 44 on the first and second parts 20,22 assist with the frictional grip. The separation of the first and second parts 20,22 (that is, the width of the slot 38), and/or the size of the first and second parts is determined to provide the required frictional grip.

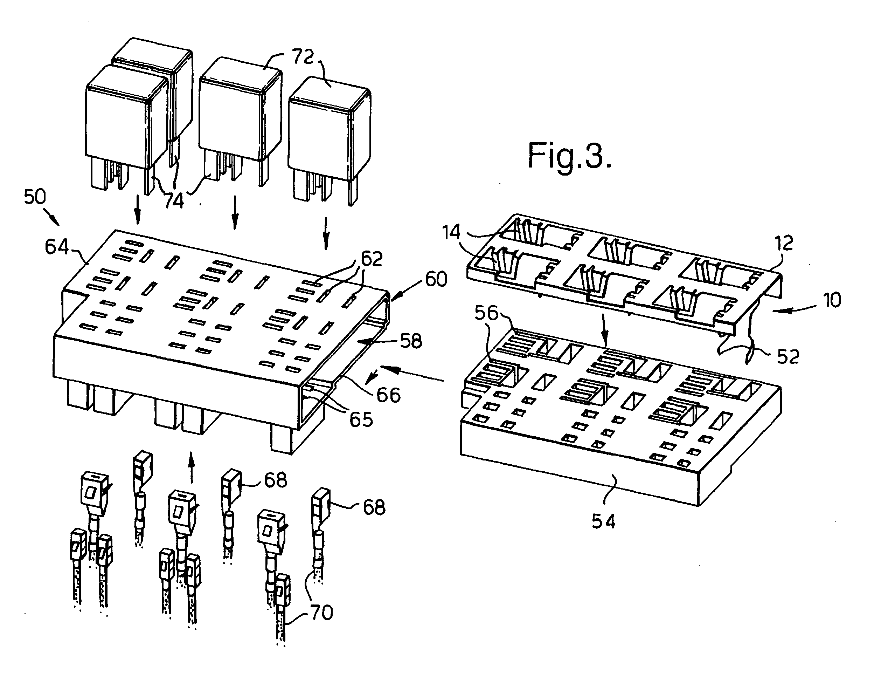

The electrical busbar 10 is used in an electrical centre 50 (Figure 3) of a motor vehicle. A connector 52 is secured to the busbar 10, for example by welding or soldering, or the connector may be integrally formed with the busbar. The connector 52 is for providing an electrical connection between the busbar 10 and a power supply (not shown) in the motor vehicle. The busbar 10 is mounted on a plastics support member 54 having suitable through bores 56 for receiving the terminals 14 of the busbar. The busbar 10 and support member 54 are then slid into place in a channel 58 formed in a plastics housing 60. The housing 60 has apertures 62 in one surface 64, some of which align with the terminals 14 of the busbar 10, and apertures 65 in the opposed surface 66 for receiving terminals 68 secured to electrical conductors 70. Relays 72 (or other switching devices, or electrical fuses) having male terminal blades 74 are positioned on the surface 64 of the housing 60. The terminal blades 74 extend through the apertures 62 to either electrically connect with the terminals 14 of the busbar 10, or to electrically connected with the terminals 68 on the conductors 70, as required. Optionally, one or more of the terminals 68 on the conductors 70 may be electrically connected to one or more of the terminals 14 of the busbar 10. The busbar 10 may be positioned on one side of the support member 54, as shown, or may be positioned on the opposite side of the support member.

Figure 1 also shows an alternative electrical busbar 100 in accordance with the present invention which can be used in conjunction with the busbar 10, or separately, to provide electrical voltage to one of the male terminal blades of electrical fuses. The alternative busbar 100 has a planar portion 112 and a terminal 114, substantially the same as the terminals 14 described above, formed in an outer edge 146 of the planar portion. The terminal 114 can mate with one of the terminals 14 of the busbar 10, or can mate with one of the terminal blades 74 of one of the relays 72, or can mate with one of the terminals 68, or can mate with any other suitable flat terminal. The busbar 100 also has a number of additional terminals 102 defined by bent resilient pairs of spaced arms 104 which can receive male terminal blades of electrical fuses therebetween.

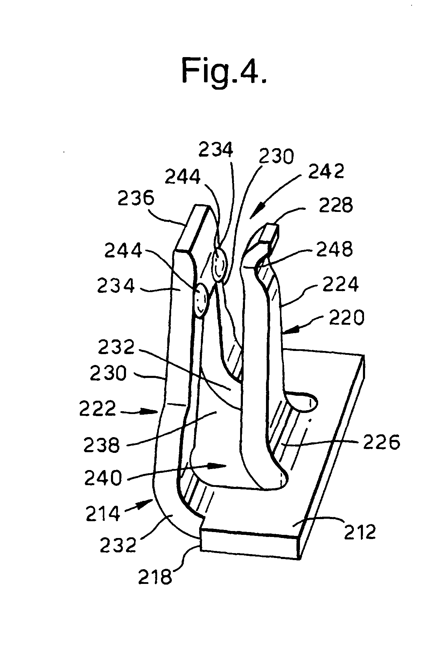

Figure 4 shows an alternative arrangement for the terminal 214 in which, in comparison to Figure 2, like parts have the same reference numeral prefixed by 200. The terminal 214 has a pair of raised bumps 244 formed on the second part 222. Each bump 244 is positioned at the other end 234 of the arms 230 where the arms join the base portion 236. The arm 224 of the first part 220 may have a raised bump as shown in Figure 2, but preferably has a curved portion 248, adjacent the free end 228, which bends towards and then away from the base portion 236 of the second part 222.

In certain circumstances, a pair of busbars in accordance with the present invention may be welded or cinched together.

The present invention is such that an electrical busbar with integrally formed terminals can be manufactured easily and cheaply. The shape of the terminals 14,114,214 allows electrical connection with male blade terminals which are inserted into the terminal from either direction. The arrangement of the busbar is such that any changes in options for an electrical centre (within which the busbar is used) can be made without the need to change the design of the busbar. The busbar is therefore multi-functional in use.

## Claims

1. An electrical busbar (10) formed in one piece by stamping and folding a sheet of metallic material, the busbar comprising a substantially planar portion (12) and at least one terminal (14) integrally formed in an edge (18) of the planar portion, wherein the or each terminal includes a first part (20) having a single arm (24) integrally connected at one end (26) to the edge, and a second part (22) having a pair of spaced arms (30) each of which is integrally connected at one end (32) to the edge on either side of the one end of the single arm of the first part, the spaced arms of the second part being integrally joined at their other ends (34) by a base portion (36), the single arm of the first part lying in a first plane, the spaced arms of the second part lying in a second plane, **characterised in that** the first and second planes are substantially parallel, substantially perpendicular to the planar portion, and spaced apart to define a slot (38) between the first and second parts which is open at both ends (40,42), wherein one open end (40) is defined by the gap between the ends (32) of the spaced arms (30) of the second part (22), and the other open end (42) is defined by the gap between the free end (28) of the single arm (24) of the first part (20) and the base portion (36) of the spaced arms (30) of the second part (22), the slot (38) being capable of receiving a male blade terminal or a rigid planar electrical conductor inserted through one of the open ends (40,42).

2. An electrical busbar as claimed in Claim 1, wherein the edge (18) of the planar portion (12) is defined by an aperture (16) formed in the planar portion.

3. An electrical busbar as claimed in Claim 2, wherein the planar portion (12) has a number of apertures (16), each aperture defining an edge (18) to which a terminal (14) is integrally connected.

4. An electrical busbar as claimed in Claim 3, wherein each aperture (16) has a pair of terminals (14) integrally connected to edges (18) of the aperture which are substantially perpendicular to one another.

5. An electrical busbar as claimed in Claim 1, wherein the edge is defined by an outer edge (46) of the planar portion (12).

6. An electrical busbar as claimed in any one of Claims 1 to 5, wherein the second part (22) of the or each terminal (14) is substantially U-shaped or substantially V-shaped.

7. An electrical busbar as claimed in any one of Claims 1 to 6, wherein the single arm (24) of the first part (20) has a free end (28) which is positioned substantially adjacent the base portion (36) of the second part (22).

8. An electrical busbar as claimed in Claim 7, wherein the free end (28) of the single arm (24), and the base portion (36) of the second part (22) have raised bumps (44) formed therein which are directed towards one another.

9. An electrical busbar as claimed in Claim 7, wherein the second part (222) has a pair of raised bumps (244) formed therein at the join between the other ends (234) of the spaced arms (230) and the base portion (236), and wherein the first part (220) has a curved portion (248) adjacent the free end (228) thereof directed towards the base portion of the second part.

## Patentansprüche

1. Stromschiene (10), die in einem Stück ausgebildet ist durch Stanzen und Falten eines Blechs aus metallischem Material, wobei die Schiene einen im Wesentlichen ebenen Abschnitt (12) und zumindest einen Anschluss (14) aufweist, der integral in einem Rand bzw. Kante (18) des ebenen Abschnitts ausgebildet ist, wobei der oder jeder Anschluss umfasst einen ersten Teil (20) mit einem einzelnen Arm (24), der an einem Ende (26) mit dem Rand integral verbunden ist, und einen zweiten Teil (22) mit einem Paar von Armen (30) mit Abstand zueinander, von denen jeder an einem Ende (32) integral verbunden ist mit dem Rand auf jeder Seite des einen Endes des einzelnen Arms des ersten Teils, wobei die Arme mit Abstand zueinander des zweiten Teils an ihren anderen Enden (34) durch einen Basisteil (36) integral verbunden sind, wobei der einzelne Arm des ersten Teils in einer ersten Ebene liegt, wobei die Arme mit Abstand zueinander des zweiten Teils in einer zweiten Ebene liegen, **dadurch gekennzeichnet, dass** die ersten und zweiten Ebenen im Wesentlichen parallel sind, im Wesentlichen senkrecht zu dem ebenen Abschnitt sind und mit Abstand zueinander vorgesehen sind, um einen Zwischenraum (38) zwischen den ersten und zweiten Teilen zu definieren, der an beiden Enden (40, 42) offen ist, wobei ein offenes Ende (40) definiert ist durch die Lücke zwischen den Enden (32) der Arme (30) mit Abstand zueinander des zweiten Teils (22), und wobei das andere offene Ende (42) definiert ist durch die Lücke zwischen dem freien Ende (28) des einzelnen Arms (24) des ersten Teils (20) und dem Basisteil (36) der Arme (30) mit Abstand zueinander des zweiten Teils (22), wobei der Zwischenraum (38) einen Flachstecker oder einen starren ebenen Stromleiter aufnehmen kann, der durch eines der offenen Enden (40, 42) eingeführt wird.

2. Stromschiene gemäß Anspruch 1, wobei der Rand (18) des ebenen Abschnitts (12) durch eine Öffnung (16) definiert ist, die in dem ebenen Abschnitt ausgebildet ist.

3. Stromschiene gemäß Anspruch 2, wobei der ebene Abschnitt (12) eine Anzahl von Öffnungen (16) aufweist, wobei jede Öffnung einen Rand (18) definiert, mit dem ein Anschluss (14) integral verbunden ist.

4. Stromschiene gemäß Anspruch 3, wobei jede Öffnung (16) ein Paar von Anschlüssen (14) integral verbunden mit Rändern (18) der Öffnung aufweist, die im Wesentlichen senkrecht zueinander sind.

5. Stromschiene gemäß Anspruch 1, wobei der Rand durch einen äußeren Rand (46) des ebenen Abschnitts (12) definiert ist.

6. Stromschiene gemäß einem der Ansprüche 1 bis 5, wobei der zweite Teil (22) des oder jedes Anschlusses (14) im Wesentlichen U-förmig oder im Wesentlichen V-förmig ist.

7. Stromschiene gemäß einem der Ansprüche 1 bis 6, wobei der einzelne Arm (24) des ersten Teils (20) ein freies Ende (28) hat, das im Wesentlichen angrenzend an den Basisteil (36) des zweiten Teils (22) positioniert ist.

8. Stromschiene gemäß Anspruch 7, wobei das freie Ende (28) des einzelnen Arms (24) und der Basisteil (36) des zweiten Teils (22) erhöhte Erhebungen (44) darauf ausgebildet haben, die zueinander ausgerichtet sind.

9. Stromschiene gemäß Anspruch 7, wobei der zweite Teil (222) ein Paar von erhöhten Erhebungen (244) darauf ausgebildet hat an der Verbindung zwischen den anderen Enden (234) der Arme (230) mit Abstand zueinander und dem Basisteil (236), und wobei der erste Teil (220) einen gebogenen Teil (248) angrenzend an sein freies Ende (228) hat, der hin zu dem Basisteil des zweiten Teils ausgerichtet ist.

## Revendications

1. Barre omnibus électrique (10) formée d'une seule pièce par estampage et pliage d'une tôle de matériau métallique, la barre omnibus comprenant une portion sensiblement plane (12) et au moins une borne (14) formée de manière intégrale dans une bordure (18) de la portion plane, dans laquelle la borne ou chaque borne inclut une première partie (20) ayant un unique bras (24) intégralement connecté à une extrémité (26) à la bordure, et une seconde partie (22) ayant une paire de bras espacés (30) dont chacun est connecté intégralement à une extrémité (32) à la bordure de part et d'autre de ladite extrémité du bras unique de la première partie, les bras espacés de la seconde partie étant joints intégralement à leurs autres extrémités (34) par une portion de base (36), le bras unique de la première partie reposant dans un premier plan, les bras espacés de la seconde partie reposant dans un second plan, **caractérisée en ce que** le premier et le second plan sont sensiblement parallèles, sensiblement perpendiculaires à la portion plane, et espacés pour définir une fente (38) entre la première et la seconde partie, qui est ouverte aux deux extrémités (40, 42), de sorte qu'une extrémité ouverte (40) est définie par l'intervalle entre les extrémités (32) des bras espacés (30) de la seconde partie (22), et l'autre extrémité ouverte (42) est définie par l'intervalle entre l'extrémité libre (28) du bras unique (24) de la première partie (20) et la portion de base (36) des bras espacés (30) de la seconde partie (22), la fente (38) étant capable de recevoir une borne en forme de lame mâle ou un conducteur électrique plan rigide inséré à travers l'une des extrémités ouvertes (40, 42).

2. Barre omnibus électrique selon la revendication 1, dans laquelle la bordure (18) de la portion plane (12) est définie par une ouverture (16) formée dans la portion plane.

3. Barre omnibus électrique selon la revendication 2, dans laquelle la portion plane (12) possède un certain nombre d'ouvertures (16), chaque ouverture définissant une bordure (18) à laquelle une borne (14) est intégralement connectée.

4. Barre omnibus électrique selon la revendication 3, dans laquelle chaque ouverture (16) possède une paire de bornes (14) intégralement connectées aux bordures (18) de l'ouverture, qui sont sensiblement perpendiculaires l'une à l'autre.

5. Barre omnibus électrique selon la revendication 1, dans laquelle chaque bordure est définie par une bordure extérieure (46) de la portion plane (12).

6. Barre omnibus électrique selon l'une quelconque des revendications 1 à 5, dans laquelle la seconde partie (22) de la borne ou de chaque borne (14) est sensiblement en forme de U ou sensiblement en forme de V.

7. Barre omnibus électrique selon l'une quelconque des revendications 1 à 6, dans laquelle le bras unique (24) de la première partie (20) possède une extrémité libre (28) qui est positionnée sensiblement adjacente à la portion de base (36) de la seconde partie (22).

8. Barre omnibus électrique selon la revendication 7, dans laquelle l'extrémité libre (28) du bras unique (24) et la portion de base (36) de la seconde partie (22) comporte des bosses en relief (44) formées dans celles-ci, qui sont dirigés les unes vers les autres.

9. Barre omnibus électrique selon la revendication 7, dans laquelle la seconde partie (222) comprend une paire de bosses en relief (244) formées en elle-même au niveau de la jointure entre les autres extrémités (234) des bras espacés (230) et la portion de base (236), et dans laquelle la première partie (220) comprend une portion incurvée (248) adjacente à l'extrémité libre (228) de celle-ci, dirigée vers la portion de base de la seconde partie.
